# EUROPEAN PATENT APPLICATION

(11) **EP 3 182 417 A1**
(43) Date of publication of application: **21.06.2017**
(21) Application number: 15832221.4
(22) Date of filing: 13.08.2015
(51) Int. Cl.: H01B 1/20

(54) **CONDUCTIVE COMPLEX AND PREPARING METHOD THEREFOR**

(30) Priority: 14.08.2014 KR 20140105867
(71) Applicant: Alteco Korea Co. Ltd., Pyeongtaek-si, Gyeonggi-do 17703 (KR)
(72) Inventor: KWON, Ojin, Seongnam-si Gyeonggi-do 13528 (KR); KIM, Chang-Ahn, Hwaseong-si Gyeonggi-do 18442 (KR); KANG, Eun Bee, Ansan-si Gyeonggi-do 15235 (KR)
(74) Representative: Manitz Finsterwald Patentanwälte PartmbB
(86) International application number: PCT/KR2015/008521
(87) International publication number: WO 2016/024842

(57) **Abstract**

Provided are a conductive composite, and a method of manufacturing the conductive composite.

## Description

### [TECHNICAL FIELD]

The present disclosure relates to a conductive composite and a method of manufacturing the conductive composite.

### [DESCRIPTION OF RELATED BACKGROUND ARTS]

Polymer materials are generally known to be inexpensive and have higher processability and greater convenience in handling than metallic or ceramic materials. Due to these properties, materials which have been conventionally used are gradually being replaced by polymer materials in daily life as well as industrial fields. However, it is difficult to replace unique properties of a metallic or ceramic material (e.g., electrical conductivity, thermal conductivity, magnetism, etc.) with a single-phase polymer material. To solve this problem and embody a material having the same advantages as a polymer material but different properties than a polymer itself, a method of manufacturing a composite by dispersing a filler having a property to be given in a polymer matrix is used.

For example, it is possible to manufacture a conductive composite by dispersing an electrically conductive filler in a polymer which is an insulator. By way of example, the electrically conductive filler can be a carbon black, a carbon nanotubes, a graphene, fine metal particles, and so on. By dispersing one or more of the examples in a well-known polymer matrix of an epoxy, an urethane, and so on, it is possible to embody a composite having both electrical conductivity and properties of a polymer matrix. Magnetic, electrical, and optical properties of a matrix can also be adjusted using an appropriate filler according a purpose in accordance to the method. With the development of industries, demands for composite having various forms and properties are increasing, and the types and number of fillers for satisfying such demands are also increasing. However, there are some problems in a process of performing the method of manufacturing the composite having the properties by dispersing a filler in a polymer matrix.

One of the problems is in that it is necessary to increase the amount of filler input to a threshold value or more to obtain the properties but the weight of the composite increases with an increase in the amount of filler input. This problem is noticeable when a metallic material is used as a filler. Considering that a weight reduction is required as a characteristic of new products and parts being developed in the electronic and car industries that are recently rapidly developing, efforts for reducing the amount of filler input in a composite through the development of a filler which is light and has high performance are required to extend application fields of a polymer composite and to improve competitiveness of major industries.

Another problem in manufacturing a composite by using a metallic filler in a polymer matrix is in a process of dispersing a filler in the matrix. This problem generally results from a large difference in specific gravity between a polymer matrix having a low specific gravity and a metallic filler having a high specific gravity. Metallic filler particles dispersed in the matrix clot together or sink in a liquid matrix over time, and properties thereof are changed. To solve this problem, a filler manufactured by attaching organic molecules having a strong affinity with a matrix to a surface of a metal can be used. However, a process for manufacturing the filler is added and productivity is degraded.

Another problem is in that an increase in the amount of filler input to a polymer matrix brings properties of a composite closer to unique properties of the filler but gradually degrades unique properties of the matrix. Development of a composite is for obtaining one new integrated material having unique properties of main elements constituting the composite, that is, both of a filler and a matrix. In a composite material composed of many different elements, physical properties of the material may be sufficiently adjusted with a very small amount of some elements, but may not be sufficiently adjusted with a very small amount of other elements. As an example of the latter case, an electrically conductive composite may be manufactured by inputting conductive fillers to a polymer matrix which is an insulator. When an amount of metallic filler input to a matrix having an adhesive property is a percolation threshold or more, an electrical conductivity of the composite drastically increases and then continues to gradually increase, but adhesiveness of the matrix continuously decreases with an increase in the amount of filler input. Therefore, even in this case, it is preferable to design a composition that maximizes electrical conductivity while minimizing degradation of basic properties of a matrix in the same way as the above problem of weight reduction.

In most polymer-based electrically conductive adhesives, silver (Ag) particles or copper (Cu) particles plated with silver are used as conductive filler. In the case of such a composite, a ratio of a weight of the conductive filler to a total weight of the composite is 70 wt% to 85 wt%, which is very high. Therefore, a method for not only solving the mentioned problems but also lowering a price of a product by reducing the amount of expensive silver (Ag) used is urgently required. To extend application fields of a polymer-based conductive composite in industries, it is required to develop a conductive filler that is light, has high performance, and is also low-priced.

Meanwhile, Korean Patent Application Publication No. 2004-0005993 discloses a welding slat manufactured with a composite material including a matrix having one or more nonconductive phases and composed of conductive particles dispersed therein.

### [DISCLOUSURE]

### [TECHNICAL PROBLEM]

The present disclosure is directed to providing a conductive composite and a method of manufacturing the conductive composite.

However, objectives of the present disclosure are not limited to the mentioned object, and other objects of the present disclosure may be clearly understood by those of ordinary skill in the art from the following description.

### [TECHNICAL SOLUTION]

One aspect of the present disclosure provides a conductive composite, comprising nonconductive hollow microspheres and conductive filler which are dispersed in a matrix, wherein the nonconductive hollow microspheres and the conductive filler comprised in the conductive composite are expanded or deformed by pressurization or thermal treatment.

Another aspect of the present disclosure provides a method of manufacturing a conductive composite, the method including: dispersing a conductive filler and nonconductive hollow microspheres in a dispersion liquid of a matrix to obtain a liquid mixture; thermally treating the liquid mixture to expand or deform the nonconductive hollow microspheres; and drying and/or curing the thermally treated mixture.

Still another aspect of the present disclosure provides a method of manufacturing a conductive composite, the method including: dispersing a conductive filler and nonconductive hollow microspheres in a dispersion liquid of a matrix to obtain a liquid mixture; and pressurizing or thermally treating the liquid mixture while drying and/or curing the liquid mixture to expand or deform the nonconductive hollow microspheres and the conductive filler.

### [EFFECTS OF THE INVENTION]

According to any one of the technical solutions, a weight of a product is reduced by reducing the amount of metallic filler input in a polymer-based conductive composite so that convenience in handling the product can be improved and applicability of the product requiring a weight reduction can be improved. Also, by using conductive fillers having a low specific gravity, it is possible to resolve a technical difficulty in dispersing fillers caused by a large difference in specific gravity with a matrix, which is a problem of existing metallic fillers, and it is possible to lower a production cost of a final product by minimizing the amount of an expensive metal used. Further, in comparison with an existing electrically conductive composite, a small amount of filler is used to embody the same electrically conductive composite as the existing electrically conductive composite so that a problem of the related art in that unique properties of the matrix are lost due to an input of a large amount of fillers can be solved.

### [BRIEF DESCRIPTION OF THE DRAWINGS]

FIG. 1 is an image showing a structure of nonconductive hollow microspheres according to an exemplary embodiment of the present disclosure.
FIG. 2 is an image showing a structure of a core-shell form conductive filler according to an exemplary embodiment of the present disclosure.
FIG. 3 is an image showing a structure of a conductive composite before heating according to an exemplary embodiment of the present disclosure.
FIG. 4 is an image showing a structure of a conductive composite after heating according to an exemplary embodiment of the present disclosure.

### [DETAILED DESCRIPTION]

Hereinafter, exemplary embodiments of the present disclosure will be described in detail with reference to the accompanying drawings so that those of ordinary skill in the art can easily practice the present disclosure. However, the present disclosure may be implemented in various different forms and is not limited to the exemplary embodiments described herein. Portions unrelated to the description will be omitted from the drawings to clearly describe the present disclosure, and like portions will be denoted by like reference numerals throughout this specification.

Throughout the present specification, when a portion is referred to as being "connected" to another portion, the two portions may be "directly connected" or "electrically connected" with still another portion interposed therebetween.

Throughout the present specification, when a member is referred to as being positioned "on" another member, the member may be in contact with the other member or still another member may be interposed between the two members.

Throughout the present specification, when a portion is referred to as "including" an element, other elements are not excluded therefrom and may be further included unless specified otherwise.

As used herein, the terms "about," "substantially," or any other terms of approximation are defined as being close to a mentioned value when a unique manufacturing and material tolerance is specified. These terms are used to prevent any unscrupulous infringer from unduly using the disclosure of the present disclosure including an accurate or absolute value described to aid in understanding of the present disclosure.

As used herein, phrases approximating "operation of ^{∼}(ing)" or "operations of ^{∼}" do not denote "operation for ^{∼}."

Throughout the present specification, the phrase "combination(s) thereof" included in a Markush-type expression denotes one or more mixtures or a combination selected from the group consisting of components stated in the Markush-type expression, that is, denotes that one or more components selected from the group consisting of components are included.

Throughout the present specification, "A and/or B" denotes "A or B," or "A and B."

Exemplary embodiments of the present disclosure will be described in detail below, but the present disclosure may not be limited thereto.

A first aspect of the present disclosure provides a conductive composite, comprising nonconductive hollow microspheres and conductive filler which are dispersed in a matrix, wherein the nonconductive hollow microspheres and the conductive filler comprised in the conductive composite are expanded or deformed by pressurization or thermal treatment.

According to an exemplary embodiment of the present disclosure, in a process of drying and/or curing a liquid mixture formed by dispersing the conductive filler and the nonconductive hollow microspheres in a dispersion liquid of the matrix, the liquid mixture is pressurized or thermally treated so that the conductive filler and the nonconductive hollow microspheres are expanded or deformed to provide the conductive composite.

According to an exemplary embodiment of the present disclosure, the nonconductive hollow microspheres may be expandable or deformable, but may not be limited thereto. The expandable or deformable nonconductive hollow microspheres are filler particles that are easily changed in shape and are polymer particles having empty space therein. The nonconductive hollow microspheres can be easily expanded by heating, and are not easily broken as a polymer material even under mechanical pressure. Also, since the nonconductive hollow microspheres have empty space therein, the nonconductive hollow microspheres may be easily changed in shape and expandable when compared to solid particles of the same material.

According to an exemplary embodiment of the present disclosure, the conductive filler may have electrical conductivity or thermal conductivity, but may not be limited thereto.

According to an exemplary embodiment of the present disclosure, the nonconductive hollow microspheres may include an inorganic material or a polymer, but may not be limited thereto. For example, the inorganic material or the polymer may include a glass, a alumina, a silica, a zirconia, a silicon nitride (SiN), a silicon carbide (SiC), a polyethylene (PE), an acrylate, or a polymethyl metacrylate (PMMA), but may not be limited thereto.

According to an exemplary embodiment of the present disclosure, the conductive filler may include a material selected from the group consisting of gold (Au), silver (Ag), copper (Cu), platinum (Pt), palladium (Pd), aluminum (Al), nickel (Ni), iron (Fe), manganese (Mn), cobalt (Co), and combinations thereof; or may include a carbon black, a carbon nanotubes, a graphene, or a conductive polymer, but may not be limited thereto. For example, the conductive polymer may include a material selected from the group consisting of a polyethylene dioxythiophene, a polyacetylene, a polypyrrole, a polyaniline, a polythiophene, poly(3,4-ethylenedioxythiophene), poly(3,4-alkylenedioxythiophene), poly(3,4-dialkylthiophene), poly(3,4-dialkoxythiophene), poly(3,4-cycloalkylthiophene), and combinations thereof, but may not be limited thereto.

According to an exemplary embodiment of the present disclosure, a size of the conductive filler may be about 50 µm or less, but may not be limited thereto. For example the size of the conductive filler may be about 50 µm or less, about 0.01 µm to about 50 µm, about 0.01 µm to about 45 µm, about 0.01 µm to about 40 µm, about 0.01 µm to about 35 µm, about 0.01 µm to about 30 µm, about 0.01 µm to about 25 µm, about 0.01 µm to about 20 µm, about 0.01 µm to about 15 µm, about 0.01 µm to about 10 µm, about 10 µm to about 50 µm, about 15 µm to about 50 µm, about 20 µm to about 50 µm, about 25 µm to about 50 µm, about 30 µm to about 50 µm, about 35 µm to about 50 µm, about 40 µm to about 50 µm, or about 45 µm to about 50 µm, but may not be limited thereto.

According to an exemplary embodiment of the present disclosure, from about 1 to about 60 parts by weight of each of the conductive filler and the nonconductive hollow microspheres may be contained in about 100 parts by weight of the conductive composite, but the parts by weight of each of the conductive filler and the nonconductive hollow microspheres may not be limited thereto. For example, parts by weight of the conductive filler with respect to about 100 parts by weight of the conductive composite may be from about 1 to about 60, from about 1 to about 50, from about 1 to about 40, from about 1 to about 30, from about 1 to about 20, from about 1 to about 10, from about 10 to about 60, from about 10 to about 50, from about 10 to about 40, from about 10 to about 30, from about 10 to about 20, from about 20 to about 60, from about 20 to about 50, from about 20 to about 40, from about 20 to about 30, from about 30 to about 60, from about 30 to about 50, from about 30 to about 40, from about 40 to about 60, or from about 40 to 50, but may not be limited thereto.

According to an exemplary embodiment of the present disclosure, the matrix may include a material selected from the group consisting of a glue, a gelatin, an albumin, a casein, a starch, a cellulose, a complex polysaccharide, a latex, a polyvinyl acetate, a vinyl material, an acrylic material, an ethylene-vinyl acetate (EVA) copolymer, a polyvinyl chloride, a polystyrene (PS), a polycarbonate, a polyester, a polyamide, a polysulfone, a polyimide, a polyvinylidene fluoride (PVDF), a polyether ether ketone (PEEK), a urea resin, an epoxy resin, a urethane resin (or polyurethane), a polychloroprene, a styrene-butadiene rubber (SBR), a polyisobutylene, a silicon resin, an epoxy-modified silicon resin, and combinations thereof, but may not be limited thereto.

For example, the dispersion liquid of the matrix is obtained by dissolving or dispersing matrix components in an appropriate solvent. The solvent may include water, low-grade alcohol, or an appropriate organic solvent (non-limiting example: ketones and so on), but may not be limited thereto.

According to an exemplary embodiment of the present disclosure, in the process of drying and/or curing the liquid mixture formed by dispersing the conductive filler and the nonconductive hollow microspheres in the matrix, thermal treatment may be performed at about 150 °C or below, but may not be limited thereto. For example, a range of the heat treatment temperature may be from about 150 °C or below, from room temperature to about 150 °C, from room temperature to about 140 °C, from room temperature to about 130 °C, from room temperature to about 120 °C, from room temperature to about 110 °C, from room temperature to about 100 °C, or from room temperature to about 80 °C, but may not be limited thereto. For example, a range of the drying and/or curing temperature may be from about 150 °C or below, from room temperature to about 150 °C, from room temperature to about 140 °C, from room temperature to about 130 °C, from room temperature to about 120 °C, from room temperature to about 110 °C, from room temperature to about 100 °C, or from room temperature to about 80 °C, but may not be limited thereto. For example, the range of the heat treatment temperature may be from about 150 °C or below, from room temperature to about 150 °C, from room temperature to about 140 °C, from room temperature to about 130 °C, from room temperature to about 120 °C, from room temperature to about 110 °C, from room temperature to about 100 °C, or from room temperature to about 80 °C, but may not be limited thereto. For example, when the matrix includes a polyurethane, an appropriate temperature for the drying and/or curing may be about 150 °C or below, from room temperature to about 150 °C, from room temperature to about 140 °C, from room temperature to about 130 °C, from room temperature to about 120 °C, from room temperature to about 110 °C, from room temperature to about 100 °C, from about 40 °C to about 150 °C, from about 40 °C to about 140 °C, from about 40 °C to about 130 °C, from about 40 °C to about 120 °C, from about 40 °C to about 110 °C, or from about 40 °C to about 100 °C, but may not be limited thereto. For example, when the matrix includes an epoxy-modified silicon, an appropriate temperature for the drying and/or curing may be from about 150 °C or below, from room temperature to about 150 °C, from room temperature to about 140 °C, from room temperature to about 130 °C, from room temperature to about 120 °C, from room temperature to about 110 °C, from room temperature to about 100 °C, from about 40 °C to about 150 °C, from about 40 °C to about 140 °C, from about 40 °C to about 130 °C, from about 40 °C to about 120 °C, from about 40 °C to about 110 °C, from about 40 °C to about 100 °C, from about 60 °C to about 150 °C, from about 60 °C to about 140 °C, from about 60 °C to about 130 °C, from about 60 °C to about 120 °C, from about 80 °C or above to about 150 °C, from about 80 °C or above to about 140 °C, from about 80 °C or above to about 130 °C, from about 80 °C or above to about 120 °C, from about 90 °C to about 150 °C, from about 90 °C to about 140 °C, from about 90 °C to about 130 °C, from about 90 °C to about 120 °C, from about 100 °C to about 150 °C, from about 100 °C to about 140 °C, from about 100 °C to about 130 °C, or from about 100 °C to about 120 °C, but may not be limited thereto.

According to an exemplary embodiment of the present disclosure, a percolation threshold of the conductive composite may be reduced from the percolation threshold of the conductive composite, but may not be limited thereto. The percolation threshold means a value indicating the conductive filler content in a coating material including the conductive filler at which the coating material transitions from a non-electrical conductor to a conductor when the conductive filler content is gradually increased from a low value to a high value. When the percolation threshold is low, it is possible to embody a conductive coating material having low conductive filler content. This may denote that a product can be produced at relatively low cost, but the meaning thereof may not be limited thereto.

According to an exemplary embodiment of the present disclosure, the conductive composite can be used in a conductive adhesive, a conductive ink, a coating material for shielding from electromagnetic waves, a conductive sealing material, or a conductive formed-in-place gasket, but may not be limited thereto.

A second aspect of the present disclosure provides a method of manufacturing a conductive composite, and the method includes dispersing a conductive filler and nonconductive hollow microspheres in a dispersion liquid of a matrix to obtain a liquid mixture, thermally treating the liquid mixture to expand or deform the nonconductive hollow microspheres, and drying and/or curing the thermally treated mixture.

Although detailed descriptions of portions overlapping the first aspect of the present disclosure will be omitted, the omitted detailed descriptions of the second aspect of the present disclosure can be applied in the same way as the detailed descriptions of the first aspect of the present disclosure.

According to an exemplary embodiment of the present disclosure, when there is a solvent in the mentioned drying and/or curing, drying (evaporation of the solvent) and curing of the matrix may be simultaneously performed, and curing may be performed when there is no solvent, but the drying and/or curing may not be limited thereto.

According to an exemplary embodiment of the present disclosure, the thermal treatment may be performed at a temperature of from about 150 °C or below, but may not be limited thereto. For example, a range of the heat treatment temperature may be from about 150 °C or below, from room temperature to about 150 °C, from room temperature to about 140 °C, from room temperature to about 130 °C, from room temperature to about 120 °C, from room temperature to about 110 °C, from room temperature to about 100 °C, or from room temperature to about 80 °C, but may not be limited thereto.

According to an exemplary embodiment of the present disclosure, the drying and/or curing may be performed at a temperature of from about 150 °C or below, but may not be limited thereto. For example, a range of the drying and/or curing temperature may be from about 150 °C or below, from room temperature to about 150 °C, from room temperature to about 140 °C, from room temperature to about 130 °C, from room temperature to about 120 °C, from room temperature to about 110 °C, from room temperature to about 100 °C, or from room temperature to about 80 °C, but may not be limited thereto.

According to an exemplary embodiment of the present disclosure, there can be a drying and/or curing temperature of the conductive composite appropriate for a kind and/or a property of a material used as the matrix. For example, when the matrix includes a polyurethane, an appropriate temperature for the drying and/or curing may be from about 150 °C or below, from room temperature to about 150 °C, from room temperature to about 140 °C, from room temperature to about 130 °C, from room temperature to about 120 °C, from room temperature to about 110 °C, from room temperature to about 100 °C, from about 40 °C to about 150 °C, from about 40 °C to about 140 °C, from about 40 °C to about 130 °C, from about 40 °C to about 120 °C, from about 40 °C to about 110 °C, or from about 40 °C to about 100 °C, but may not be limited thereto. For example, when the matrix includes an epoxy-modified silicon, an appropriate temperature for the drying and/or curing may be from about 150 °C or below, from room temperature to about 150 °C, from room temperature to about 140 °C, from room temperature to about 130 °C, from room temperature to about 120 °C, from room temperature to about 110 °C, from room temperature to about 100 °C, from about 40 °C to about 150 °C, from about 40 °C to about 140 °C, from about 40 °C to about 130 °C, from about 40 °C to about 120 °C, from about 40 °C to about 110 °C, from about 40 °C to about 100 °C, from about 60 °C to about 150 °C, from about 60 °C to about 140 °C, from about 60 °C to about 130 °C, from about 60 °C to about 120 °C, from about 80 °C or above to about 150 °C, from about 80 °C or above to about 140 °C, from about 80 °C or above to about 130 °C, from about 80 °C or above to about 120 °C, from about 90 °C to about 150 °C, from about 90 °C to about 140 °C, from about 90 °C to about 130 °C, from about 90 °C to about 120 °C, from about 100 °C to about 150 °C, from about 100 °C to about 140 °C, from about 100 °C to about 130 °C, or from about 100 °C to about 120 °C, but may not be limited thereto.

According to an exemplary embodiment of the present disclosure, the matrix may include a material selected from the group consisting of a cellulose, a latex, a polyvinyl acetate, a vinyl material, an acrylic material, an ethylene-vinyl acetate (EVA) copolymer, a polyvinyl chloride, a polystyrene (PS), a polycarbonate, a polyester, a polyamide, a polysulfone, a polyimide, a polyvinylidene fluoride (PVDF), a polyether ether ketone (PEEK), a urea resin, an epoxy resin, a urethane resin (or polyurethane), a polychloroprene, a styrene-butadiene rubber (SBR), a polyisobutylene, a silicon resin, an epoxy-modified silicon resin, and combinations thereof, but may not be limited thereto.

For example, the dispersion liquid of the matrix is obtained by dissolving or dispersing the matrix components in an appropriate solvent. The solvent may include water, low-grade alcohol, or an appropriate organic solvent (non-limiting example: ketones and so on), but may not be limited thereto.

According to an exemplary embodiment of the present disclosure, the liquid mixture may further includes a thickener, an antioxidant, or a surfactant as an additive, but may not be limited thereto. For example, during a manufacturing process, the thickener, the antioxidant, or the surfactant may be input together with the nonconductive hollow microspheres and the conductive filler and dispersed in the dispersion liquid of the matrix for the manufacturing, but the liquid mixture is not limited thereto.

According to an exemplary embodiment of the present disclosure, the liquid mixture is applied on a substrate, but may not be limited thereto. For example, the substrate may include a material selected from the group consisting of an acrylonitrile-butadiene-styrene (ABS), a bulk moulding compound (BMC), a sheet moulding compound (SMC), a fiber-reinforced plastic (FRP), a polypropylene (PP), a polyphenylene oxide (PPO), a PS, reaction injection modeling (RIM), a thermal curing resin, a polycarbonate, and combinations thereof, but may not be limited thereto. Also, for example, the application may be performed by spraying or coating, but may not be limited thereto.

A third aspect of the present disclosure provides a method of manufacturing a conductive composite, and the method includes dispersing a conductive filler and nonconductive hollow microspheres in a dispersion liquid of a matrix to obtain a liquid mixture, and pressurizing or thermally treating the liquid mixture while drying and/or curing the liquid mixture to expand or deform the nonconductive hollow microspheres and the conductive filler.

Although detailed descriptions of portions overlapping the first aspect of the present disclosure will be omitted, the omitted detailed descriptions of the third aspect of the present disclosure can be applied in the same way as the detailed descriptions of the first aspect of the present disclosure.

According to an exemplary embodiment of the present disclosure, when there is a solvent in the mentioned drying and/or curing, drying (evaporation of the solvent) and curing of the matrix may be simultaneously performed, and curing may be performed when there is no solvent, but the drying and/or curing may not be limited thereto.

According to an exemplary embodiment of the present disclosure, the drying and/or curing may be performed at a temperature of from about 150 °C or below, but may not be limited thereto.

According to an exemplary embodiment of the present disclosure, the thermal treatment in the process of drying and/or curing may be performed at a temperature of about 150 °C or below, but may not be limited thereto. For example, a range of the drying and/or curing temperature may be from about 150 °C or below, from room temperature to about 150 °C, from room temperature to about 140 °C, from room temperature to about 130 °C, from room temperature to about 120 °C, from room temperature to about 110 °C, from room temperature to about 100 °C, or from room temperature to about 80 °C, but may not be limited thereto.

According to an exemplary embodiment of the present disclosure, there can be a drying and/or curing temperature of the conductive composite appropriate for a kind and/or a property of a material used as the matrix. For example, when the matrix includes a polyurethane, an appropriate temperature for the drying and/or curing may be from about 150 °C or below, from room temperature to about 150 °C, from room temperature to about 140 °C, from room temperature to about 130 °C, from room temperature to about 120 °C, from room temperature to about 110 °C, from room temperature to about 100 °C, from about 40 °C to about 150 °C, from about 40 °C to about 140 °C, from about 40 °C to about 130 °C, from about 40 °C to about 120 °C, from about 40 °C to about 110 °C, or from about 40 °C to about 100 °C, but may not be limited thereto. For example, when the matrix includes an epoxy-modified silicon, an appropriate temperature for the drying and/or curing may be from about 150 °C or below, from room temperature to about 150 °C, from room temperature to about 140 °C, from room temperature to about 130 °C, from room temperature to about 120 °C, from room temperature to about 110 °C, from room temperature to about 100 °C, from about 40 °C to about 150 °C, from about 40 °C to about 140 °C, from about 40 °C to about 130 °C, from about 40 °C to about 120 °C, from about 40 °C to about 110 °C, from about 40 °C to about 100 °C, from about 60 °C to about 150 °C, from about 60 °C to about 140 °C, from about 60 °C to about 130 °C, from about 60 °C to about 120 °C, from about 80 °C or above to about 150 °C, from about 80 °C or above to about 140 °C, from about 80 °C or above to about 130 °C, from about 80 °C or above to about 120 °C, from about 90 °C to about 150 °C, from about 90 °C to about 140 °C, from about 90 °C to about 130 °C, from about 90 °C to about 120 °C, from about 100 °C to about 150 °C, from about 100 °C to about 140 °C, from about 100 °C to about 130 °C, or from about 100 °C to about 120 °C, but may not be limited thereto.

According to an exemplary embodiment of the present disclosure, the matrix may include a material selected from the group consisting of a glue, a gelatin, an albumin, a casein, a starch, a cellulose, a complex a polysaccharide, a latex, a polyvinyl acetate, a vinyl material, an acrylic material, an ethylene-vinyl acetate (EVA) copolymer, a polyvinyl chloride, a polystyrene (PS), a polycarbonate, a polyester, a polyamide, a polysulfone, a polyimide, a polyvinylidene fluoride (PVDF), a polyether ether ketone (PEEK), a urea resin, an epoxy resin, a urethane resin, a polychloroprene, a styrene-butadiene rubber (SBR), a polyisobutylene, a silicon resin, an epoxy-modified silicon resin, and combinations thereof, but may not be limited thereto. For example, the dispersion liquid of the matrix is obtained by dissolving or dispersing the matrix components in an appropriate solvent. The solvent may include water, low-grade alcohol, or an appropriate organic solvent (non-limiting example: ketones and so on), but may not be limited thereto.

According to an exemplary embodiment of the present disclosure, the liquid mixture may further includes a thickener, an antioxidant, or a surfactant as an additive, but may not be limited thereto. For example, during the manufacturing process, the thickener, the antioxidant, or the surfactant may be input together with the nonconductive hollow microspheres and the conductive filler and dispersed in the dispersion liquid of the matrix for the manufacturing, but the liquid mixture is not limited thereto.

According to an exemplary embodiment of the present disclosure, the liquid mixture is applied on a substrate, but may not be limited thereto. For example, the substrate may include a material selected from the group consisting of an acrylonitrile-butadiene-styrene (ABS), a bulk moulding compound (BMC), a sheet moulding compound (SMC), a fiber-reinforced plastic (FRP), a polypropylene (PP), a polyphenylene oxide (PPO), a polystyrene (PS), reaction injection modeling (RIM), a thermal curing resin, a polycarbonate, and combinations thereof, but may not be limited thereto. Also, for example, the application may be performed by spraying or coating, but may not be limited thereto.

A general process of manufacturing a polymer-based conductive composite is as follows: fillers of a material different from a polymer matrix are dispersed in the matrix to give different property to the matrix. At this time, an appropriate additive may be added as necessary to achieve stability, simplicity of application, and convenience of operation of a dispersion liquid in a liquid state, and also other required properties including adjustability of speed of a curing and/or drying process, physical properties after curing (e.g., mechanical physical properties, such as adhesive strength, adhesive durability, surface hardness, etc.), and so on. Such a composite is initially manufactured in a liquid form and stored in a container. After the liquid composite is applied on a target material, the liquid composite is dried and/or hardened according to a method and a time determined to be suited for each product and is finally processed to exhibit designed performance.

In a case in which a composite employs metallic fillers, the composite is heavy so that convenience in handling a material is degraded and it is difficult to apply the composite on a product or a part requiring a weight reduction. To solve the problem of difficulty in dispersion in a matrix and other problems, a new light conductive filler which will replace existing silver (Ag) particles or silver-plated copper (Cu) particles is provided. The new filler has a structure of a core-shell, such as a silver-plated copper particle in which a center of copper corresponding to a core is empty and the copper is replaced by a polymer material having a low specific gravity. A volume of the new filler can be easily increased by heating, and a shape of the new filler can be easily changed by applying mechanical force.

In a composite obtained by dispersing fillers in a matrix, the fillers are mainly in a fine particle form. When the fine filler particles dispersed in the matrix are not in contact with each other, it is not possible for the composite to have electrical conductivity. A method of sufficiently reducing a distance between fine filler particles is to increase an amount of input fillers to a sufficient level, but as described above, the method results in an increase in a weight and price of an electrically conductive composite and quality degradation. As a solution to this problem, a method of inducing networking of conductive filler by dispersing the conductive filler together with nonconductive hollow microspheres in a matrix so that a composite having electrical conductivity using a relatively small amount of conductive filler can be used as will be described below.

First, a liquid composite is manufactured by dispersing a conductive filler together with nonconductive hollow microspheres in a matrix. Next, the liquid composite is attached to a material to be coated and dried and/or hardened. When heating is performed in a process of drying and/or curing, hollow fillers containing expandable gas expand in the matrix. Due to metal plating of surfaces of the conductive filler, the conductive filler have a much lower expansion rate than the nonconductive hollow microspheres. As a result, the two kinds of fillers have a difference in relative size. During this process, the conductive filler particles having a small size are pushed into gaps between the nonconductive hollow microspheres having a large size, and a structure in which the conductive particles are connected in a net shape is formed in the matrix. In this way, it is possible to fill much space except for a minimum conductive path required for electrical conductivity in an existing electrically conductive composite with nonconductive hollow microspheres having a low specific gravity.

Ideal Contact between spheres is a point contact, and a contact area is very small. The above-described new conductive filler initially has a shape close to a sphere when manufactured. Therefore, when the conductive filler particles initially come into contact with each other in a curing process of the composite, the contact area is very limited. However, when expansion of the conductive filler particles and the nonconductive hollow microspheres dispersed together with the conductive filler particles in the matrix proceeds, mechanical pressure in the composite gradually increases, and the shape of the conductive filler changes due to the pressure. Such deformation of the conductive filler results in an increase in the contact area of the fillers. Consequently, the increase in the contact area of the conductive filler results in an increase in electrical conductivity of the composite or a reduction in electrical resistance. Also, when pressure is exerted in a predetermined direction from the outside, the hollow particles are expanded and deformed in a vertical-plane direction of the external pressure due to internal pressure of the hollow fillers expanding in the matrix. Therefore, networking of the conductive particles is facilitated in a vertical plane, and anisotropy can be achieved.

An exemplary embodiment of the present disclosure provides an electrically conductive composite having a low percolation threshold of conductive filler content. The percolation threshold denotes a value indicating conductive filler content in a coating material including conductive fillers at which the coating material transitions from a non-electrical conductor to a conductor when the conductive filler content is gradually increased from a low value to a high value. When the percolation threshold is lower, it is possible to embody a conductive coating material having low conductive filler content. This may denote that a product can be produced at relatively low costs, but the meaning thereof may not be limited thereto.

According to an exemplary embodiment of the present disclosure, the electrically conductive composite can be used in various forms. An example of a representative product may be a material for shielding from electromagnetic waves, a conductive adhesive, and so on. The material for shielding from electromagnetic waves is processed in the form of a gasket, a coating material, a film, a fabric, etc. and used. Products or industrial fields, such as mobile phones, cars, medical devices, electronic measuring devices, monitors, controllers, antennas, communication devices, military equipment, etc., in which these products are used are very large in number and varied. Conductive adhesives have been attracting attention as a replacement of existing solder particularly in a surface mounting technology field of the electronics manufacturing industry. Since an electrically conductive composite is frequently coated on a surface of a part or a product and used as a conductive adhesive or for shielding from electromagnetic waves, the electrically conductive composite is composed of a nonconductive adhesive matrix and dispersed conductive filler.

According to an exemplary embodiment of the present disclosure, adhesive matrices can be classified into natural polymers, synthetic polymers, and inorganic polymers according to components thereof. Natural polymer adhesives can be classified into proteins, for example, a glue, a gelatin, an albumin, a casein, etc., a carbonhydrates, for example, a starch, a cellulose, a complex polysaccharides, etc., and natural rubbers, for example, a latex, and so on. Synthetic polymer adhesives can be classified into a vinyl material, for example, a polyvinyl acetate, a copolymer thereof, etc., a thermoplastic resin, for example, an acrylic copolymer, an ethylene-vinyl acetate (EVA) copolymer, a PVC, a polystyrene (PS), a polycarbonate, a polyester, a polyamide, a polysulfone, a polyimide, etc., a thermal curing resin, for example, a urea resin, an epoxy resin, a urethane resin (or polyurethane), etc., and a rubber, for example, a polychloroprene, a styrene-butadiene rubber (SBR), a polyisobutylene, a silicon resin, an epoxy-modified silicon resin, etc. A thermoplastic resin adhesive has an advantage in that repair thereof is easy after curing. On the other hand, a thermal curing resin adhesive has an irreversible curing process but a major advantage in that high adhesive strength is maintained even at a high temperature. Since each of a thermoplastic resin and a thermal curing resin have both an advantage and a disadvantage, there are products whose applicability is extended by mixing the two kinds of materials, that is, combining properties of the materials. Also an adhesives can be classified into a room-temperature curable adhesive, a photocurable adhesive, a solvent adhesive, a hot-melt adhesive, a pressure sensitive adhesive (PSA), etc. according to curing methods. A photocurable adhesive can be classified into an ultraviolet ray adhesive, an electron beam adhesive, a near visible light adhesive, and a microwave adhesive.

According to an exemplary embodiment of the present disclosure, the conductive filler are in a spherical-shape, a fiber-shape, a flat-shape, a granular-shape, and so on. Flat-shaped filler particles are known to be best for implementing high electrical conductivity because a probability of networking among the flat-shaped filler particles is high. Also, metals, such as gold (Au), silver (Ag), copper (Cu), platinum (Pt), palladium (Pd), aluminum (Al), nickel (Ni), etc., are used as the conductive filler, and sizes of these particles are generally from about 0.01 µm to about 50 µm. In addition to the metals, a carbon material, such as carbon black, carbon nanotubes, graphene, etc., or a conductive polymer are used as the conductive filler. Nonconductive hollow microspheres in various forms are used separately from such conductive filler to reduce a weight and production costs of a product or adjust mechanical properties and so on. Examples of the nonconductive hollow microspheres are an inorganic material, such as an alumina, a silica, or a zirconia, and an organic material, such as a PMMA and a PE. Silver (Ag), which is most widely used as a conductive filler of a material requiring a low electrical resistance, is one precious metal and is a very expensive material. As fillers obtained by partially improving silver as a conductive filler, there are fillers obtained by plating surfaces of copper particles, which are relatively inexpensive, with silver. Such a structure is referred to as a core-shell structure. As a material of a core, a ceramic material, such as a silica (SiO₂), a zirconia (ZrO₂), an alumina (Al₂O₃), a glass, etc., a PE, a PMMA, a cellulose acetate, and another polymer resin can be used besides copper, and various single metals or alloys can be used as a material of the shell. Regarding manufacturing and structures of microspheres, it is possible to refer to literature [US Patent No. 4,968,562A, US Patent No. 5,045,569 (Joaquin Delgado), Adv. Mater. 2008, 20, 3987-4019 (by WiongWen Lou et al.), J, Kor. Soc. Cloth, Ind. Vol. 10, No. 2, pp. 254-259 (2008) (Sinhui Lee, Soomin Park), Elastomers and composites Vol. 47, No. 2, pp. 168-173 (Byonghyun Ahn), Adv. Mater. 2003, 15, No. 7-8, April 17, pp. 641-646 (Yugang Sun et al.), Colloid Polym. Sci. (2006) 284: 1221-1228 (Huiyun Xia et al.), Chinese J. Struct. Chem. 2010, Vol. 29, No. 4, pp. 555-564 (Wang Yi-Long et al.)].

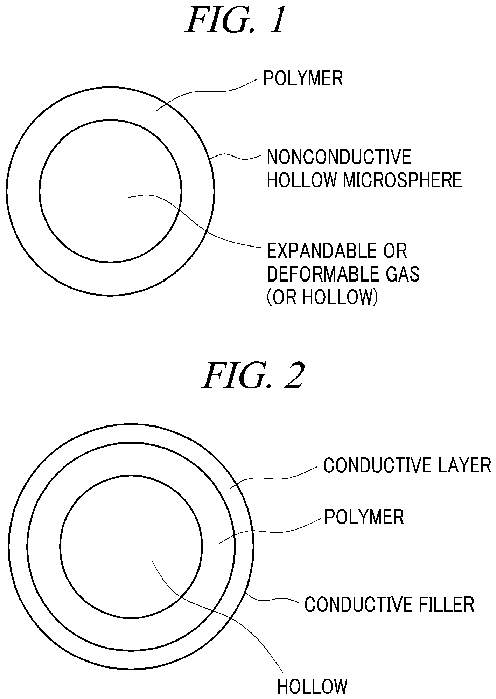

According to an exemplary embodiment of the present disclosure, polymer particles having empty space therein are used as filler particles that are easily changed in size and shape (FIG. 1). Such microspheres are referred to as hollow microspheres. When expandable gas is injected into the empty space of the particles, the particles can be easily expanded by heating and are not easily broken as a polymer material even under mechanical pressure. Also, since the particles have empty space therein, the particles can be easily changed in shape when compared to solid particles of the same material. Therefore, when the particles are dispersed in a matrix, the particles can be easily expanded by heating even in surroundings of an irregular matrix molecular chain. Such hollow microspheres are commercialized and can be purchased for use. For example, there are Expancel^{®}Microspheres of AkzoNobel Inc. It is necessary to change such hollow polymer microspheres into the core-shell structure by plating surfaces of the hollow polymer microspheres with a metal so as to process the polymer microspheres as conductive fillers (FIG. 2). Regarding a plating method and manufacturing of the core-shell structure, it is possible to refer to literature [Korean Journal of Materials Research Vol. 11, No. 11, 2001 (Ukjung Kim et al.), Chem. Eur. J. 2000, 6, No. 3 pp. 413-419 (Frank Caruso), Chem. Commun., 2002, pp. 350-351 (A. G. Dong et al.), CHIN. PHYS. LETT. Vol. 22, No. 4 (2005) 975 (LIU Jun-Bing et al.), J. of Nanomaterials Vol. 2010 (Choo Hwan Chang et al.)].

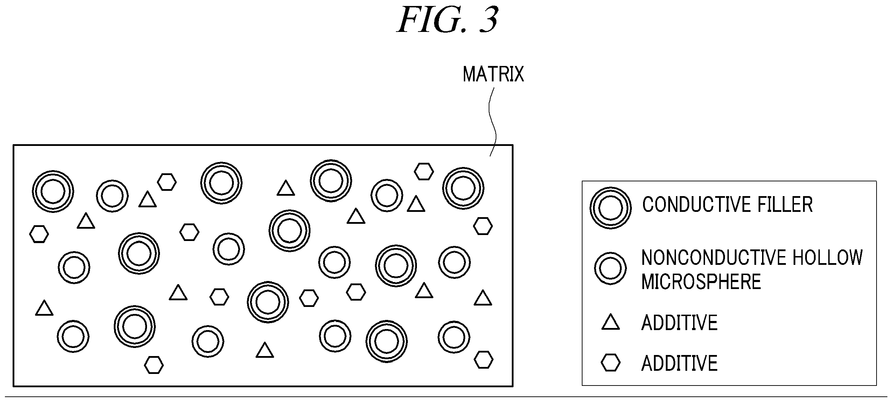

According to an exemplary embodiment of the present disclosure, metallic fillers of about 35 vol% to about 40 vol% are known to be required to obtain a low-resistance composite when the metallic fillers are evenly dispersed in a matrix. Properties of the composite are affected by an average size and distribution of the filler particles. The smaller the particle size, the higher a density of the filler particles required to exceed a percolation threshold. The matrix is made as a liquid including a monomer that can be highly polymerized to be attached to a material to be coated by being heated or ultraviolet hardened (FIG. 3).

According to an exemplary embodiment of the present disclosure, a thermal curing resin is initially in the form of a monomer or a prepolymer and polymerized during a curing process. A curing temperature is generally from about 80 °C to about 150 °C, and some products can be hardened even at room temperature. In many cases, one-part adhesive is required as a conductive adhesive used for attaching electronic parts to a substrate, and the conductive adhesive needs to endure various environments of a manufacturing process. Curing is frequently performed at about 150 °C for about one minute to about two minutes or less. A substrate can be several types, such as an acrylonitrile-butadiene-styrene (ABS) resin, a bulk moulding compound (BMC), a fiber-reinforced plastic (FRP), a polypropylene (PP), a polyphenylene oxide (PPO), a polystyrene (PS), reaction injection modeling (RIM), a thermal curing resin (SMC), a polycarbonate, and so on.

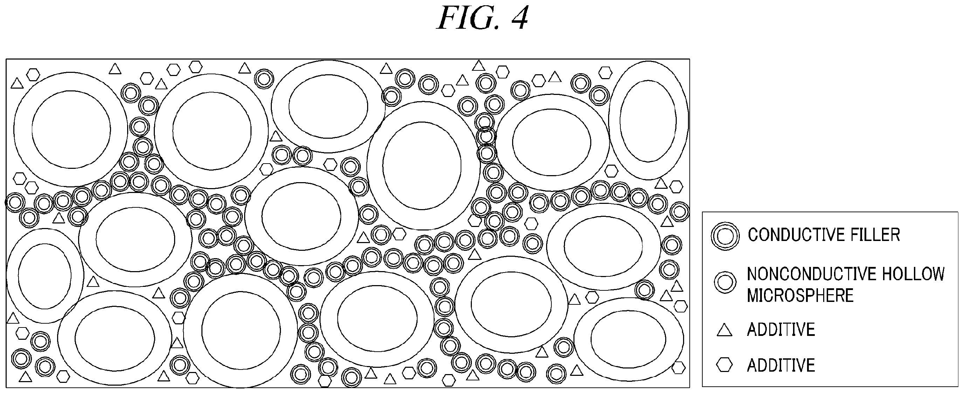

According to an exemplary embodiment of the present disclosure, when an electrically conductive liquid coating material is applied on a substrate and dried and/or hardened, a solvent evaporates in the case of a solvent-type coating material or a liquid monomer is polymerized in the case of a non-solvent-type coating material so that a solid composite is attached to a material to be coated. The coating material can be directly sprayed with a sprayer or applied with a brush so that the material to be coated can be coated. After that, fillers are expanded or deformed by heating or pressurizing the film. At this time, nonconductive hollow microspheres expand due to the heat but should not melt. Also, the nonconductive hollow microspheres should maintain a temperature thereof until a matrix is completely hardened and changed into a solid so that expanded spaces thereof are not reduced. The conductive filler particles also expand due to the heat, but an expansion rate of the conductive particles should be much lower than an expansion rate of the nonconductive filler particles. The conductive filler particles dispersed together with the nonconductive hollow microspheres are pushed into gaps between the hollow microspheres due to expansion of the nonconductive hollow microspheres and concentrated to come into contact with each other or very close to each other so that a path through which heat or electricity can flow is newly formed before or after the heating (FIG. 4). At this time, an electrical conductivity percolation threshold is affected by relative sizes of the nonconductive hollow microspheres and the conductive filler. It is also possible to input nonconductive hollow microspheres having a previously calculated fixed size instead of nonconductive hollow microspheres that are expandable by heat and proceed with curing.

Exemplary experimental embodiments of the present disclosure will be described below. However, the following embodiments are only examples for aiding in understanding the present disclosure, and the present disclosure is not limited to the following embodiments.

### [Examples]

### Example 1

3.3 g of an acrylate copolymer (Expancel 461 DU 40) of AkzoNobel Inc. which is nonconductive hollow microspheres, 7.2 g of silver-coated hollow glass spheres (SH400S20) of Potters LLC which are conductive fillers, 20 g of a aqueous polyurethane dispersion (NPC-3600) of Nanux Corp. which is a polymer matrix, and 10 g of ethanol which is a solvent were input to a paste mixer container and then stirred in a paste mixer for 10 minutes at a revolution speed of 750 rpm and a rotation speed of 750 rpm (Rot/Rev=750/750). After the manufactured composite was coated on a polycarbonate film which is a substrate using an applicator, the polycarbonate film was inserted in an oven and dried at 60 °C for 30 minutes. After drying, an electrical resistance of the manufactured conductive composite was measured with a resistance meter.

### Comparative Example 1

A conductive composite was manufactured in the same way as the Example 1 except that the temperature of drying was changed to room temperature. An electrical resistance of the manufactured conductive composite was measured with a resistance meter, and results of the measuring of the electrical resistances of the Example 1 and the Comparative Example 1 are shown in Table 1 below.

**[Table 1]**

| **Classification** | **Average diameter of conductive filler particles (µm)** | **Matrix** | **Drying conditions** | **Electrical resistance (Ω)** |
|---|---|---|---|---|
| **Example 1** | **13** | **Polyuretha ne** | **60°C, 30 minutes** | **40** |
| **Comparative Example 1** | **13** | **Polyuretha ne** | **Room temperature** | **438,175** |

As shown in Table 1, it can be seen that there is a definite difference when the drying conditions are changed between 60 °C and room temperature. This is an effect caused by the difference in drying temperature and denotes that the electrical conductivity of the manufactured conductive composite increases with a reduction in the electrical resistance.

### Example 2

4.0 g of an acrylate copolymer (Expancel 461 DU 40) of AkzoNobel Inc. which is nonconductive hollow microspheres, 13.5 g of silver-coated hollow glass spheres (SG02S40) of Potters LLC which are conductive fillers, 20 g of a aqueous polyurethane dispersion (NPC-3600) of Nanux Corp. which is a polymer matrix, and 20 g of ethanol which is a solvent were input to a paste mixer container and then stirred in a paste mixer for 10 minutes at a revolution speed of 750 rpm and a rotation speed of 750 rpm (Rot/Rev=750/750). After the manufactured composite was coated on a polycarbonate film which is a substrate using an applicator, the polycarbonate film was inserted in an oven and dried at 60 °C for 30 minutes. After drying, an electrical resistance of the manufactured conductive composite was measured with a resistance meter.

### Comparative Example 2

A conductive composite was manufactured in the same way as the Example 2 except that the temperature of drying was changed to room temperature. An electrical resistance of the manufactured conductive composite was measured with a resistance meter, and results of the measuring of the electrical resistances of the Example 2 and the Comparative Example 2 are shown in Table 2 below.

**[Table 2]**

| **Classification** | **Average diameter of conductive filler particles (µm)** | **Matrix** | **Drying conditions** | **Electrical resistance (Ω)** |
|---|---|---|---|---|
| **Example 2** | **3** | **Polyuretha ne** | **60°C, 30 minutes** | **11** |
| **Comparative Example 2** | **3** | **Polyuretha ne** | **Room temperature** | **1,228** |

As shown in Table 2, it can be seen that there is a definite difference when the drying conditions are changed between 60 °C and room temperature. This is an effect caused by the difference in drying temperature and denotes that the electrical conductivity of the manufactured conductive composite increases with a reduction in the electrical resistance.

### Example 3

4.4 g of an acrylate copolymer (Expancel 461 DU 40) of AkzoNobel Inc. which is nonconductive hollow microspheres, 13.1 g of silver-coated hollow glass spheres (SH400S20) of Potters LLC which are conductive fillers, 8.9 kg of epoxy-modified silicon which is a polymer matrix, and 6 g of butyl acetate which is a solvent were input to a paste mixer container and then stirred in a paste mixer for 10 minutes at a revolution speed of 750 rpm and a rotation speed of 750 rpm (Rot/Rev=750/750). After the manufactured composite was coated on a polycarbonate film which is a substrate using an applicator, the polycarbonate film was inserted in an oven so that the nonconductive hollow microspheres could expand at 120 °C for 30 minutes and then harden at 140 °C for 30 minutes. After the curing was finished, an electrical resistance was measured using a resistance meter.

### Comparative Example 3

A conductive composite was manufactured in the same way as the Example 3 except that the temperature of drying was changed to 80 °C to adjust an expansion condition of the nonconductive hollow microspheres. An electrical resistance of the manufactured conductive composite was measured with a resistance meter, and results of the measuring of the electrical resistances of the Example 3 and the Comparative Example 3 are shown in Table 3 below.

**[Table 3]**

| **Classification** | **Average diameter of conductive filler particles (µm)** | **Matrix** | **Drying conditions** | **Electrical resistance (Ω)** |
|---|---|---|---|---|
| **Example 3** | **13** | **Epoxy-modified silicone** | **120°C, 30 minutes** | **2** |
| **Comparative Example 3** | **13** | **Epoxy-modified silicone** | **80°C, 30 minutes** | **42** |

As shown in Table 3, it can be seen that there is a definite difference when the drying conditions are changed between 120 °C and 80 °C. However, this does not denote that the electrical properties of the manufactured conductive composite are improved with an increase in drying temperature, but does denote that there is an appropriate temperature according to properties of the manufactured material and an appropriate temperature for improving electrical conductivity of the conductive composite manufactured by expanding nonconductive hollow microspheres is 120 °C in the experimental embodiment and the comparative example of the present disclosure. From the Example 3 and the Comparative Example 3, it can be seen that the electrical resistance is lowered and the electrical conductivity of the manufactured conductive composite is increased according to the difference in the drying temperature.

The scope of the present disclosure is defined by the appended claims rather than the detailed description, and those of ordinary skill in the art to which the present disclosure pertains would appreciate that the present disclosure can be implemented in other detailed forms without changing the technical spirit or indispensable characteristics thereof. Accordingly it should be understood that the above-described embodiments are only illustrative in all aspects and are not to be restrictive. For example, each component described as a single type may be executed in a distributed manner, and components described to be distributed may also be executed in an integrated form.

The scope of the present disclosure is indicated by the claims which will be described below rather than the detailed description, and it should be understood that the claims and all modifications or modified forms drawn from the concept of the claims are included in the scope of the present disclosure.

## Claims

1. A conductive composite, comprising nonconductive hollow microspheres and conductive filler which are dispersed in a matrix,
wherein the nonconductive hollow microspheres and the conductive filler comprised in the conductive composite are expanded or deformed by pressurization or thermal treatment.

2. The conductive composite of claim 1, wherein the nonconductive hollow microspheres are expandable or deformable.

3. The conductive composite of claim 1, wherein the conductive filler has electrical conductivity or thermal conductivity.

4. The conductive composite of claim 1, wherein the nonconductive hollow microspheres include an inorganic material or a polymer.

5. The conductive composite of claim 4, wherein the inorganic material or the polymer includes glass, alumina, silica, zirconia, silicon carbide (SiC), silicon nitride (SiN), a polyethylene (PE), acrylate, or a polymethyl metacrylate (PMMA).

6. The conductive composite of claim 3, wherein the conductive filler includes a material selected from the group consisting of gold (Au), silver (Ag), copper (Cu), platinum (Pt), palladium (Pd), aluminum (Al), nickel (Ni), iron (Fe), manganese (Mn), cobalt (Co), and combinations thereof; or includes carbon black, carbon nanotubes, graphene, or a conductive polymer.

7. The conductive composite of claim 6, wherein the conductive polymer includes a material selected from the group consisting of a polyethylene dioxythiophene, a polyacetylene, a polypyrrole, a polyaniline, a polythiophene, poly(3,4-ethylenedioxythiophene), poly(3,4-alkylenedioxythiophene), poly(3,4-dialkylthiophene), poly(3,4-dialkoxythiophene), poly(3,4-cycloalkylthiophene), and combinations thereof.

8. The conductive composite of claim 1, wherein a size of the conductive filler is 50 µm or less.

9. The conductive composite of claim 1, wherein parts by weight of the conductive filler with respect to 100 parts by weight of the conductive composite is from 1 to 60.

10. The conductive composite of claim 1, wherein the matrix includes a material selected from the group consisting of a cellulose, a latex, a polyvinyl acetate, a vinyl material, an acrylic material, an ethylene-vinyl acetate (EVA) copolymer, a polyvinyl chloride, a polystyrene (PS), a polycarbonate, a polyester, a polyamide, a polysulfone, a polyimide, a polyvinylidene fluoride (PVDF), a polyether ether ketone (PEEK), a urea resin, an epoxy resin, a urethane resin, a polychloroprene, a styrene-butadiene rubber (SBR), a polyisobutylene, a silicon resin, an epoxy-modified silicon resin, and combinations thereof.

11. A method of manufacturing a conductive composite, the method comprising:
dispersing a conductive filler and nonconductive hollow microspheres in a dispersion liquid of a matrix to obtain a liquid mixture;
thermally treating the liquid mixture to expand or deform the nonconductive hollow microspheres; and
drying and/or curing the thermally treated mixture.

12. A method of manufacturing a conductive composite, the method comprising:
dispersing a conductive filler and nonconductive hollow microspheres in a dispersion liquid of a matrix to obtain a liquid mixture; and
pressurizing or thermally treating the liquid mixture while drying and/or curing the liquid mixture to expand or deform the nonconductive hollow microspheres and the conductive filler.

13. The method of claim 11 or 12, wherein the drying and/or the curing is performed at a temperature of 150 °C or less.

14. The method of claim 11 or 12, wherein the matrix includes a material selected from the group consisting of a cellulose, a latex, a polyvinyl acetate, a vinyl material, an acrylic material, an ethylene-vinyl acetate (EVA) copolymer, a polyvinyl chloride, a polystyrene (PS), a polycarbonate, a polyester, a polyamide, a polysulfone, a polyimide, a polyvinylidene fluoride (PVDF), a polyether ether ketone (PEEK), a urea resin, an epoxy resin, a urethane resin, a polychloroprene, a styrene-butadiene rubber (SBR), a polyisobutylene, a silicon resin, an epoxy-modified silicon resin, and combinations thereof.

15. The method of claim 11 or 12, wherein the liquid mixture further includes a thickener, an antioxidant, or a surfactant.

16. The method of claim 11 or 12, wherein the liquid mixture is applied on a substrate.

17. The method of claim 16, wherein the substrate includes a material selected from the group consisting of an acrylonitrile-butadiene-styrene (ABS) resin, bulk moulding compound (BMC), a sheet moulding compound (SMC), a fiber-reinforced plastic (FRP), a polypropylene (PP), a polyphenylene oxide (PPO), a polystyrene (PS), reaction injection modeling (RIM), a thermal curing resin, a polycarbonate, and combinations thereof.

18. The method of claim 16, wherein the application of the liquid mixture is performed by spraying or coating.
